(19)

Europäisches
Patentamt

European
Patent Office

Office européen
des brevets

(11)     EP 3 840 335 B1

(12)         **FASCICULE DE BREVET EUROPEEN**

(45) Date de publication et mention
de la délivrance du brevet:
**28.09.2022  Bulletin 2022/39**

(21) Numéro de dépôt: **21157251.6**

(22) Date de dépôt: **12.04.2011**

(51) Classification Internationale des Brevets (IPC):
***H04L 65/613*** *(2022.01)*

(52) Classification Coopérative des Brevets (CPC):
**H04L 65/613**

(54) **RÉCEPTION D'UN CONTENU NUMÉRIQUE EN MODE TRUQUE**

EMPFANG VON DIGITALEN INHALTEN IM TRICKMODUS

RECEPTION OF DIGITAL CONTENT IN TRICK MODE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **15.04.2010  FR 1052890**

(43) Date de publication de la demande:
**23.06.2021  Bulletin 2021/25**

(62) Numéro(s) de document de la (des) demande(s)
initiale(s) en application de l'article 76 CBE:
**11730364.4 / 2 559 218**

(73) Titulaire: **Orange
92130 Issy-les-Moulineaux (FR)**

(72) Inventeurs:
• **BOUVET, Eric
35520 MONTREUIL LE GAST (FR)**
• **BABONNEAU, Gérard
35235 THORIGNE-FOUILLARD (FR)**

(74) Mandataire: **Plasseraud IP
66, rue de la Chaussée d'Antin
75440 Paris Cedex 09 (FR)**

(56) Documents cités:
**US-A1- 2006 037 057     US-A1- 2006 056 801
US-A1- 2007 101 012     US-A1- 2007 271 388
US-A1- 2008 148 327**

**EP 3 840 335 B1**

**Description**

La présente invention concerne la réception de contenu numérique, comme une vidéo ou vidéo avec bande son, par un terminal, depuis un réseau de communication de type Internet, ou IP pour 'Internet Protocol', et plus particulièrement la mise en œuvre d'un mode truqué.

La vidéo à la demande est un service offert par un serveur qui permet à un utilisateur d'un terminal de visionner un film de son choix parmi une liste prédéterminée. Plus précisément, à cet effet, le terminal émet une requête à destination du serveur indiquant le film choisi, et il reçoit en retour un flux de données numériques relatives à ce film. Dans ce contexte, le terminal peut souhaiter modifier la vitesse d'affichage du film en cours de réception, en augmentant cette vitesse pour un visionnage en accéléré ou en la réduisant pour un visionnage en ralenti, ou inversant le sens de lecture pour un retour rapide. La modification de cette vitesse repose sur une gestion de modes dits truqués (ou 'trick modes' en anglais).

Le document US20060037057 propose une gestion de ces modes truqués dans le contexte de réception d'une vidéo. Dans ce document, lorsqu'un terminal souhaite augmenter la vitesse d'affichage de la vidéo, il émet une requête de type GET selon le protocole HTTP qui comprend des adresses physiques des images à afficher dans le mode accéléré. Puis, le serveur transmet au terminal les données numériques correspondant à ces adresses physiques.

Cette gestion des modes truqués se fonde sur les adresses physiques des images dans la vidéo et de ce fait, permet notamment de sélectionner partiellement les images de la vidéo à afficher. Lorsqu'une augmentation de la vitesse d'affichage est demandée, l'utilisateur du terminal visionne une partie seulement du contenu de la vidéo, et en ce sens la vitesse d'affichage est augmentée par rapport à une durée d'affichage de la vidéo dans les mêmes conditions de réseau sans le mode truqué.

Toutefois, dans certains cas, la durée d'affichage peut ne pas correspondre à l'accélération requise via le mode truqué par rapport à la durée nominale de la vidéo. Par exemple, si on requiert une accélération de quatre fois la vitesse d'affichage durant toute la vidéo, il est possible que la durée totale d'affichage de la vidéo dans ce mode accéléré soit beaucoup plus longue que la durée nominale de la vidéo (c'est-à-dire à la vitesse de 24 ou 25 images par seconde) divisée par quatre.

Ainsi, dans le contexte du document US20060037057, le visionnage quatre fois plus rapide d'une vidéo peut prendre sensiblement plus de temps qu'un quart de la durée de la vidéo dans certaines conditions de réseau, notamment lorsque le débit de transmission dans le réseau est très faible.

Document US 2008/148327 divulgue un procédé de contrôle adaptatif de la vitesse de lecture d'un contenu numérique, telle qu'une vidéo diffusée en streaming.

La présente invention vient améliorer la situation.

L'invention est définie par les revendications indépendantes. D'autres modes de réalisation sont définis par les revendications dépendantes. Tous les exemples et descriptions techniques d'appareils, de produits et/ou de méthodes dans la description et/ou les dessins qui ne sont pas couverts par les revendications sont présentés non pas comme des modes de réalisation de l'invention, mais comme de la technique antérieure ou des exemples utiles pour comprendre l'invention.

Un premier aspect de la présente invention propose un procédé de gestion de réception au niveau d'un terminal d'un contenu numérique qui est transmis sous la forme d'un flux de données dans un réseau;

> ledit contenu numérique étant reçu par ledit terminal à une valeur représentative de débit de réception ;
> une durée de rendu nominal étant associée au contenu numérique ;
> ledit procédé de gestion de réception comprenant les étapes suivantes au niveau du terminal :
>
> /a/ détecter une activation d'un mode truqué correspondant à une modification de la durée de rendu nominal selon un facteur de modification associé audit mode truqué ;
> /b/ déterminer des données à requérir en fonction, d'une part, du facteur de modification et, d'autre part, de la_valeur représentative de débit de réception ;
> /c/ requérir lesdites données auprès du serveur ; et
> /d/ recevoir les données requises.

Aucune limitation n'est attachée au type de terminal utilisé, ni même au type de réseau de transmission. Le terminal peut être par exemple un PC, un téléphone mobile ou une STB (pour 'Set Top Box' en anglais) ou encore une télévision connectée.

Aucune limitation non plus n'est attachée aux termes 'contenu numérique'. Un contenu numérique peut correspondre notamment à une série d'images, à une vidéo, ou de manière plus générale à tout type de contenu multimédia qui peut être transmis dans le réseau considéré.

Dans le contexte présent, un terminal est adapté pour recevoir un contenu numérique et pour en faire un rendu.

Le rendu du contenu numérique reçu sous forme de données consiste à fournir au niveau d'un terminal le contenu numérique sous une forme accessible à un utilisateur du terminal. Par exemple, des données reçues correspondant à une vidéo sont rendues au niveau du terminal sous la forme d'un affichage de la vidéo correspondante avec sa bande son associée.

Il est ici prévu que, sur détection d'un mode truqué, on détermine les données à requérir pour mettre en œuvre ce mode truqué. Aucune limitation n'est attachée au moyen mis en œuvre pour déclencher un mode truqué. On peut par exemple prévoir qu'un utilisateur actionne une commande qui déclenche la détection d'un mode truqué au niveau du terminal. A partir du déclenchement d'un mode truqué, les données reçues peuvent être ignorées au niveau du terminal. On peut donc prévoir que le terminal demande auprès du serveur un arrêt de la transmission du flux de données dès qu'un mode truqué est détecté. Il est aussi aisément possible de prévoir que le serveur arrête de transmettre le flux de données sur réception d'une première requête de données depuis le terminal. Cet aspect ne fait pas l'objet de la présente invention.

On appelle 'durée de rendu nominal' la durée, ou encore période de temps, nécessaire pour fournir à un utilisateur un rendu nominal d'un contenu numérique. Dans le contexte d'une vidéo, il est par exemple classique de considérer que le rendu est effectué à une vitesse de 24 ou 25 images par seconde, la durée de rendu nominal étant fonction du nombre d'images du contenu numérique considéré complet.

On entend ici par les termes «mode truqué » tout changement de la durée de rendu nominal du contenu numérique avec un facteur de modification qui peut permettre une augmentation de la durée de rendu nominal (ralenti) ou une diminution (avance rapide). Dans le cas d'une avance rapide, la durée du rendu nominal est modifiée par modification du contenu numérique en un contenu numérique partiel. Ainsi, seule une partie du contenu numérique est prise en compte, tout en respectant le facteur de modification qui, lui, détermine une durée de rendu associée au contenu numérique partiel. Il peut être avantageux de mettre en œuvre un mode de réalisation de la présente invention pour fournir une lecture en ralenti dans le cas où la transmission réseau est si faible qu'elle ne permet pas une lecture nominale.

Un facteur de modification peut être un facteur d'accélération visant à réduire la durée de rendu nominal ou encore un facteur de décélération visant à augmenter la durée de rendu nominal.

Dans ce contexte de gestion de mode truqué, on prévoit ici avantageusement de prendre en compte une valeur représentative de débit en réception au niveau du terminal afin de pouvoir garantir que la modification de la durée de rendu nominal corresponde au facteur de modification associé au mode truqué.

On entend ici par les termes 'débit de réception' le débit auquel le terminal reçoit des données transmises dans le réseau.

Une valeur représentative du débit de réception est ici une valeur qui évolue en fonction de l'évolution du débit de réception du terminal. Cette valeur représentative peut par exemple correspondre à la valeur de débit en réception au niveau du terminal ou encore correspondre à une durée de réception de données, qui en fonction de la taille des données, indique le débit de réception.

Il convient de noter ici que, dans l'art antérieur, il n'est pas possible de garantir que la modification de la durée de rendu du contenu numérique corresponde au facteur de modification associé au mode truqué. En effet, selon l'art antérieur, dans le contexte d'une vidéo requise en mode accéléré par exemple, il est prévu de fournir à l'utilisateur une vision partielle de la vidéo, en sélectionnant des images parmi toutes les images de la vidéo sur la base d'espacement physique des images dans le contenu numérique. Dans de telles conditions, on permet à l'utilisateur d'accélérer le visionnage de la vidéo par rapport au visionnage qu'il aurait en mode non truqué puisqu'il ne voit qu'une image sur quelques unes. Toutefois, si le débit de réception du terminal est lent, le visionnage en accéléré ne garantira pas une réduction du temps de visionnage du facteur de modification souhaité. En effet, selon l'art antérieur, le facteur du mode truqué est appliqué par rapport à une durée de rendu potentiel sans mode truqué, c'est-à-dire par rapport au rendu que l'on pourrait fournir sans mode truqué à l'utilisateur au même moment et dans les mêmes conditions de réception, mais pas par rapport à la durée de rendu nominal. Ainsi, si la durée de rendu potentiel sur une période de temps est deux fois plus grande que la durée de rendu nominal, l'utilisateur qui souhaite visionner une vidéo quatre fois plus vite par exemple sur cette période de temps, ne pourra la visionner que deux fois plus vite approximativement. Dans de telles conditions, l'utilisateur peut être frustré de devoir attendre sensiblement plus longtemps que prévu pour parcourir la vidéo en mode accéléré.

Ainsi, dans l'art antérieur, la durée de rendu perceptible par l'utilisateur est dépendante des conditions de réception alors que, dans un mode de réalisation de la présente invention, la prise en compte de la valeur représentative de débit de réception permet de s'adapter de telle sorte que le facteur de modification du mode truqué soit appliqué par rapport à la durée de rendu nominal, et non pas par rapport à une durée de rendu qui serait fonction des conditions de réception dans certains cas de bas débit, comme dans l'art antérieur. De manière simplifiée, selon l'art antérieur, lorsque l'utilisateur déclenche un mode truqué d'accélération par 4 d'une vidéo, environ un quart des images est affiché. Dans ces conditions, si le débit de réception est trop lent au niveau du terminal, l'affichage d'un quart des images ne permet pas de réduire d'un quart la durée de rendu de la vidéo.

Avantageusement, grâce aux caractéristiques de la présente invention, il est possible de garantir le fait que la modification de la durée de rendu nominal corresponde au facteur associé au mode truqué demandé. En effet, grâce à la prise en compte d'une valeur représentative de débit de réception au niveau du terminal, un procédé de réception selon la présente invention est en mesure d'adapter le rendu du contenu numérique en fonction des contraintes de réception de telle sorte que la durée de rendu effectivement perçue par l'utilisateur du terminal soit modifiée conformément au facteur associé au mode truqué demandé.

Il est à cet effet prévu d'adapter le parcours partiel du contenu numérique en fonction de la valeur représentative du débit de réception du terminal de manière à respecter le facteur de modification du rendu nominal qui est requis par un utilisateur du terminal. Ainsi, l'utilisateur perçoit clairement la prise en compte de l'accélération demandée. Même si les conditions de réception du terminal qu'il utilise sont mauvaises, il pourra obtenir un aperçu de la vidéo dans une période de temps qui correspond à son attente.

L'utilisateur, qui active un mode truqué pour visionner n fois plus vite une vidéo par rapport à une durée de rendu nominal, visionnera effectivement n fois plus vite cette vidéo, même dans le cas où le débit de réception est si faible qu'il ne permettrait pas un rendu nominal.

Dans un mode de réalisation, les données correspondent à une série d'unités de rendu du contenu numérique,

des adresses temporelles étant associées auxdites unités de rendu de la série, chacune correspondant à une position temporelle de l'unité de rendu à laquelle elle est associée au sein de la série, relativement à la durée de rendu nominal de la série;

l'étape /b/ étant répétée n fois, n étant un entier naturel,

à une itération de l'étape /b/ les données déterminées correspondent à une unité de rendu de la série ayant une adresse temporelle déduite en fonction du facteur de modification, de la valeur représentative de débit de réception et de l'adresse temporelle d'une unité de rendu correspondant aux données déterminées à l'itération de l'étape /b/ précédente ; et

à l'étape /c/ on émet une requête comprenant l'adresse temporelle déduite.

Ici, on considère que le contenu numérique est une série d'unités de rendu. On entend par unités de rendu, des données qui peuvent être regroupées pour constituer un élément qui peut être rendu accessible à l'utilisateur sur le terminal. Une unité de rendu peut par exemple être une image. En effet, une image est un élément unitaire qui peut être rendu accessible à l'utilisateur une fois rendu par le terminal.

Lorsque les unités de rendu correspondent à des images, la mise en œuvre d'un tel procédé peut aisément être appliquée à tout type de série d'images, que ce soit un diaporama, ou encore une vidéo, un film de cinéma, etc ... Dans le cas où cette série d'images est une série de photos d'un diaporama, la durée de rendu nominal peut être définie de manière quelconque par son créateur. Quoiqu'il en soit, le facteur de modification est appliqué par rapport à cette durée de rendu nominal, initialement attachée au contenu numérique considéré.

Dans ce contexte, on prévoit ici d'associer à chaque unité de rendu de la série, une adresse temporelle qui indique sa position temporelle au sein de la série, c'est-à-dire par rapport aux autres unités de rendu de cette série. Les données du contenu numérique sont ainsi référencées temporellement, au sein de la série, en leur assignant des adresses temporelles. Plus précisément, l'adresse temporelle d'une unité de rendu correspond à une référence temporelle à laquelle elle devrait être affichée par rapport aux autres images du contenu numérique, dans le contexte d'une durée de rendu nominal du contenu numérique. Par exemple, on peut donner l'adresse temporelle 0 à la première unité de rendu de la série et une adresse notée $T_a$ à l'unité de rendu suivante, $T_a$ pouvant alors correspondre à un intervalle de temps séparant l'affichage des deux images consécutives pour une durée nominale du contenu numérique. Généralement, l'affichage vidéo s'effectue à une vitesse nominale de 25 images par seconde à la télévision. Dans ce cas, l'intervalle de temps entre deux images consécutives est d'un vingt-cinquième de seconde. Ainsi, dans un tel contexte, chaque image de la vidéo peut être associée à une adresse temporelle de la forme $nT_a$, avec n entier, pour n variant de 0 à p, p étant tel que $pT_a$ correspond à la durée de rendu nominal de la vidéo, c'est-à-dire ici la durée d'affichage de la vidéo.

On prévoit ici de répéter l'étape /b/ de détermination de données à requérir, de sorte à déterminer toutes les unités de rendu de la série d'unité de rendu à restituer à l'utilisateur sur son terminal pendant l'activation du mode truqué. Chaque itération de l'étape /b/ peut donc correspondre à la sélection d'une unité de rendu. Ces itérations successives sont avantageusement réalisées de manière liées par le fait que l'itération courante prend en compte des informations obtenues à l'itération précédente. En effet, l'itération courante est mise en œuvre sur la base de l'adresse temporelle de l'unité de rendu précédemment sélectionnée à l'itération précédente. Ainsi, au cours de la mise en œuvre d'une itération de l'étape /b/, on prend en compte les éléments suivants :

- valeur représentative de débit de réception ;
- facteur de modification du mode truqué ; et
- adresse temporelle de l'unité de rendu précédemment sélectionnée.

Grâce à ces éléments, il est possible d'optimiser la quantité de données à requérir par rapport aux conditions de réception. Sur la base de ces éléments, on dispose de la durée de réception de l'unité de rendu précédemment sélectionnée. On peut alors déterminer de manière optimale l'adresse temporelle de la prochaine unité de rendu à sélectionner en prenant en compte le facteur de modification du mode truqué.

La requête de données faite au serveur peut indiquer l'adresse ou les adresses temporelles des unités de rendu sélectionnées, le serveur étant alors capable de déterminer les données à transmettre en fonction des adresses temporelles.

Dans un mode de réalisation de la présente invention, les données correspondent à une série d'unités de rendu du contenu numérique,

des adresses temporelles étant associées auxdites unités de rendu de la série, chacune correspondant à une position temporelle de l'unité de rendu à laquelle elle est associée au sein de la série, relativement à la durée de rendu nominal de la série ;

l'étape /b/ étant répétée n fois, n étant un entier naturel,

à une itération de l'étape /b/ les données déterminées correspondent à une unité de rendu de la série ayant une adresse temporelle déduite en fonction du facteur de modification, de la valeur représentative de débit de réception et de l'adresse temporelle d'une unité de rendu correspondant aux données déterminées à l'itération de l'étape /b/ précédente ; et

le terminal a accès à un fichier faisant correspondre chaque adresse temporelle à une adresse physique pour les unités de rendu de la série sur la base de la durée de rendu nominal ; et à l'étape /c/ on émet une requête comprenant l'adresse physique correspondant à l'adresse temporelle déterminée.

Ici, il est prévu de fournir directement au serveur les adresses physiques des données qui sont requises pour le mode truqué par le terminal. A cet effet, on prévoit un fichier de correspondance permettant de faire correspondre les adresses temporelles avec des adresses physiques respectives. On entend par 'adresse physique' d'une unité de rendu de la série une référence indiquant la position de stockage de l'unité de rendu au sein de la série.

Ce fichier de correspondance peut également indiquer les tailles des différentes unités de rendu de la série.

Dans un mode de réalisation, la valeur représentative de débit de réception est une valeur fixe ; et à l'étape /b/, on détermine une pluralité d'unités de rendu correspondant aux données à requérir ; et à l'étape /d/, on indique au réseau les données correspondant à ladite pluralité.

Avantageusement, dans le cas d'un débit de valeur fixe, ou qui tout au moins peut être assimilé à une valeur fixe, le terminal peut disposer de la valeur représentative de débit fixe Il peut alors faire une estimation de durée de réception pour n'importe quelle unité de rendu du contenu numérique. Il est également possible de prévoir que le terminal dispose de la taille des unités de rendu.

En réitérant de manière récurrente l'étape /b/, il est possible de sélectionner les unités de rendu les plus appropriées successivement, en prenant en compte à chaque itération la durée de réception de l'unité de rendu précédemment sélectionnée.

Dans un autre mode de réalisation, le procédé comprend en outre l'étape suivante :

/e/ répéter les étapes /b/ à /d/ tant que le mode truqué est activé ;

à l'étape /d/ on mesure une durée de réception d'unité de rendu correspondant aux données requises à l'étape /c/ précédentes ; et

dans lequel la valeur représentative de débit de réception pour l'itération suivante de l'étape /b/ est la durée de réception mesurée à l'étape /d/ précédente.

Dans ce cas, avantageusement, il est possible d'optimiser la sélection des unités de rendu à requérir pour le mode truqué, en fonction d'éventuelles évolutions du débit de réception au fil du temps. A cet effet, on prévoit ici de mesurer la durée de réception de l'unité de rendu reçue après sélection à l'itération de l'étape /b/ précédente. Puis, sur la base de cette durée de réception, qui représente un débit de réception, et de l'adresse temporelle de l'unité de rendu précédemment reçue, on détermine une adresse temporelle d'une unité de rendu à recevoir pour la mise en œuvre du mode truqué.

Dans un mode de réalisation, les unités de rendu de la série ayant des tailles respectives, le procédé de gestion comprenant en outre les étapes suivantes après l'étape /d/ :

- calculer une valeur de débit en divisant la taille de l'unité de rendu reçue à l'étape /d/ par la durée de réception mesurée à ladite étape ;
- obtenir une valeur de débit corrigée en appliquant un filtre ; et
- déterminer la valeur représentative de débit de réception pour l'itération suivante de l'étape /b/ sur la base de la valeur de débit corrigée.

Ici, on prévoit donc d'obtenir à l'aide d'un filtre passe-bas la valeur représentative de débit de réception déterminée à utiliser à une itération de l'étape /b/ prochaine. Une telle mise en œuvre permet d'éviter des écarts erronés de variations brusques au niveau de la réception de données. Tel peut être le cas, notamment lorsque l'unité de rendu reçue est de petite taille. Dans ce cas, sa durée de réception peut induire en erreur quant aux variations de débit effectives. En filtrant sur la base de débits précédents eux-mêmes filtrés, on évite de mauvaises interprétations.

Un deuxième aspect de la présente invention propose un terminal comprenant des moyens adaptés pour mettre en œuvre un procédé de gestion de réception selon le premier aspect de la présente invention.

Un troisième aspect de la présente invention propose un système de gestion de contenu numérique comprenant un terminal selon le deuxième aspect de la présente invention et un serveur adapté pour coopérer avec ce terminal.

Un quatrième aspect de la présente invention propose un programme d'ordinateur comportant des instructions pour la mise en œuvre du procédé selon le premier aspect de la présente invention, lorsque ce programme est exécuté par un processeur.

Un cinquième aspect de la présente invention propose un support d'enregistrement sur lequel est stocké le programme d'ordinateur selon le quatrième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre les principales étapes d'un procédé de gestion de réception d'un contenu numérique selon un mode de réalisation de la présente invention ;
- la figure 2 illustre un procédé de gestion de réception d'un contenu numérique par un terminal depuis un serveur selon un mode de réalisation de la présente invention dans lequel un débit de réception au niveau du terminal est assimilé à un débit fixe ;
- la figure 3 illustre une architecture d'un fichier de correspondance dans une application à la vidéo selon un mode de réalisation de la présente invention ;
- la figure 4 illustre un procédé de gestion de réception d'un contenu numérique par un terminal depuis un serveur selon un mode de réalisation de la présente invention dans lequel le débit de réception est considéré comme variable au cours du temps ;
- la figure 5 illustre en détail un procédé de gestion de réception d'une vidéo selon un mode de réalisation de la présente invention ;
- la figure 6 illustre une architecture d'un terminal de réception et un serveur correspondant selon un mode de réalisation de la présente invention.

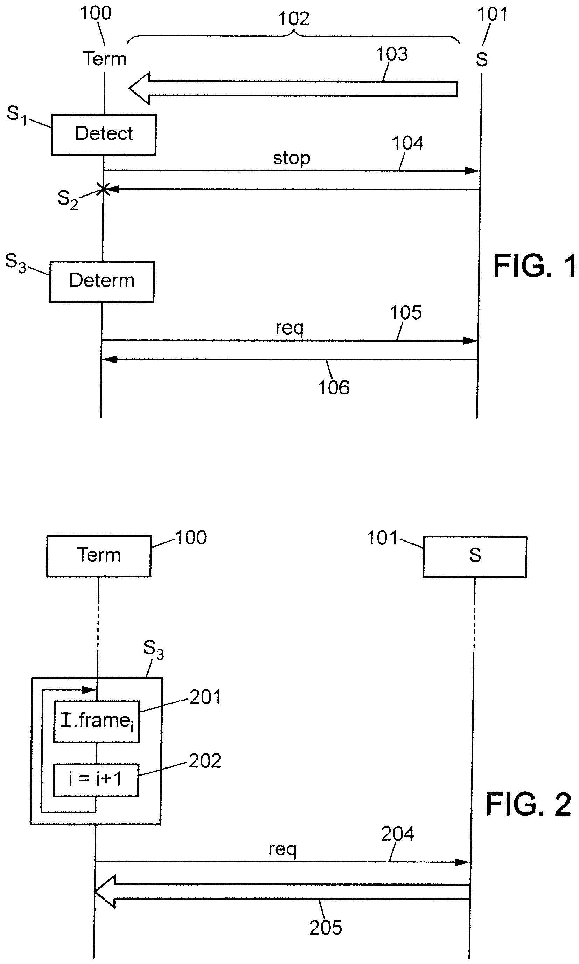

La figure 1 illustre un procédé de gestion de réception d'un contenu numérique selon un mode de réalisation de la présente invention. Un tel procédé de gestion de réception peut être mis en œuvre dans tout type de réseau de communication 102 comprenant un serveur 101 adapté pour transmettre au moins un contenu numérique et un terminal 100 adapté pour recevoir le ou les contenus numériques transmis par le serveur.

Le terminal 100 reçoit un contenu numérique depuis le serveur 101 via le réseau de communication 102 selon un flux de données 103. Aucune limitation n'est attachée au moyen mis en œuvre pour déclencher la réception d'un contenu numérique au niveau du terminal dans la présente invention. On peut notamment prévoir que ce contenu numérique est transmis au terminal par le serveur sur requête ou encore on peut prévoir que le contenu numérique est diffusé dans le réseau, le terminal le recevant alors dans un contexte de diffusion.

Puis, pendant la réception de ce flux de données 103, à une étape S1, le terminal détecte une activation d'un mode truqué. Ce mode truqué correspond à une modification de la durée de rendu nominal selon un facteur de modification associé au mode truqué activé. Suite à cette détection, à une étape S2, la réception du flux de données 103 est stoppée. Dans le cas où le terminal a requis initialement le contenu numérique, on peut prévoir qu'il émet un message 104 demandant l'arrêt de la transmission du flux de données 103 à destination du serveur 101. Puis, la transmission du flux de données est alors stoppée. On peut alternativement prévoir que l'étape S2 est effectuée uniquement au niveau du terminal 100, c'est-à-dire que le flux de données 103 peut être encore transmis mais ignoré au niveau du terminal. Quoiqu'il en soit, à partir de l'étape S2, le terminal ne traite plus de données du flux 103.

Puis, à une étape S3, on détermine des données du contenu numérique à requérir. A cet effet, avantageusement, on se fonde à la fois sur le facteur de modification associé au mode truqué activé, et aussi sur une valeur représentative de débit de réception au niveau du terminal. Ainsi, on peut adapter les données à requérir auprès du serveur en fonction du débit de réception, de sorte à respecter le facteur de modification de durée de rendu nominal associé au mode truqué activé.

On est alors en mesure de requérir au moins les prochaines données à rendre au niveau du terminal en émettant un message de requête 105 à destination du serveur 101.

Ensuite, le terminal reçoit la ou les données requises précédemment dans un message ou plusieurs messages 106.

La prise en compte du débit de réception permet au terminal de rendre à un utilisateur les données reçues sur une période de temps qui est conforme au facteur de modification associé au mode truqué. On peut prévoir de répéter l'étape de détermination S3 tout au long de la mise en œuvre du mode truqué.

Il convient par ailleurs de noter que les données à requérir peuvent être indiquées au serveur soit par des adresses temporelles, c'est à dire des références de temps des données au sein du contenu numérique au regard de la durée de rendu nominale, soit encore par des adresses physiques, c'est-à-dire des références physiques des données dans le contenu numérique.

Dans le cas où les données du contenu numérique sont une série d'unités de rendu, il est avantageux de prévoir de sélectionner de proche en proche les unités de rendu à requérir en réitérant l'étape S3 sur la base d'informations obtenues à l'itération précédente. Grâce à cet enchaînement, on peut optimiser la quantité d'unités rendues à l'utilisateur en permettant un traitement successif optimisé des unités de rendu reçues. Autrement dit, de manière générale, en réitérant successivement et de manière imbriquée la sélection d'unité, on peut ainsi prendre en compte le temps de traitement relatif à l'unité de rendu requise précédemment pour décider de sélectionner l'unité de rendu suivante.

Dans les sections suivantes, à titre illustratif seulement et par souci de simplification, le contenu numérique correspond à une vidéo. Ainsi, une série d'unités de rendu est une série d'images à rendre à une vitesse nominale de 25 images par seconde. Pour illustration également, le mode truqué correspond par la suite à un facteur d'accélération de rendu, c'est-à-dire un mode de lecture rapide de vidéo avec un facteur de modification noté A (pour Accélération).

La figure 2 illustre un procédé de gestion de réception d'un contenu numérique par un terminal 100 depuis un serveur 101 selon un mode de réalisation de la présente invention dans lequel un débit de réception au niveau du terminal est assimilé à un débit fixe. Dans ce cas, il est avantageusement possible d'anticiper les données à requérir et de ce fait, il est possible de requérir une série de données dans un seul message de requête à destination du serveur. Ici la valeur représentative de débit de réception est une valeur de débit fixe notée D.

Il est ici plus précisément décrit l'étape de détermination des données à requérir auprès du serveur et les étapes qui lui succèdent. Dans un mode de réalisation, dans ce contexte de débit de réception fixe, à l'étape de détermination S3, le terminal 100 a en charge d'obtenir des adresses temporelles identifiant les images de la vidéo à requérir selon le mode truqué afin de les fournir au serveur.

Dans le contexte de mise en œuvre d'un mode truqué correspondant à une réduction de la durée de rendu nominal d'une vidéo (c'est-à-dire une lecture rapide de vidéo), seule une partie des images est affichée. Or, selon certains codages, il n'est pas possible de décoder certaines images indépendamment les unes des autres. Dans un mode de réalisation, les images affichées en mode truqué correspondent à des images qui peuvent être décodées de manière indépendante.

Les images d'une vidéo sont en général organisées en GOP ('Group Of Pictures' en anglais). La première image d'un groupe est référencée I-frame (pour 'Intra coded frame' en anglais) et peut être codée entièrement et indépendamment des autres images de ce groupe. Pour la suite, à titre illustratif, dans le contexte de l'affichage d'une vidéo en mode 'lecture rapide', on ne considère que les adresses temporelles des images I-frame. Il convient de noter que certains codages de type 'Random Access Point' permettent des décodages à partir d'images qui ne sont pas de type I frame. Dans ce cas, cde telles images peuvent être utilisés par les modes truqués dans un mode de réalisation de la présente invention.

Dans un mode de réalisation, le procédé de gestion de réception est itératif, chaque itération de l'étape de détermination d'une image à requérir étant basée sur l'étape de détermination précédente. Afin d'initier cette itération, une première image est sélectionnée pour être requise. Peu importe l'image initiale choisie à ce stade. On peut par exemple considérer comme image initiale du procédé itératif, la dernière image reçue avant la détection de l'activation du mode truqué S1.

A chaque étape 201 de détermination d'une image, ou encore sélection d'une image, on souhaite sélectionner l'image de type I-frame, notée I-frame$_i$, qui peut être affichée juste après la précédente dans le mode de lecture rapide demandé. A cet effet, le temps de traitement de l'image précédente est déterminé. Il peut être obtenu par exemple en fonction du débit fixe D et de la taille de l'image précédente $S_i$, i étant un index de l'image précédemment sélectionnée, donc i représentant le nombre d'images de type I-frame déjà sélectionnées pour cette vidéo. La taille des images de la vidéo peut ici être connue par le terminal via un moyen quelconque. On peut prévoir notamment qu'avant la transmission de la vidéo, le serveur transmet un fichier indiquant certaines caractéristiques de la vidéo telles que la taille des images.

Dans ce cas, la durée de réception $L_i$ (L pour 'Latence', i étant un index de l'image précédemment sélectionnée) de l'image $I_i$ précédemment sélectionnée vérifie l'équation suivante :

$$L_i = \frac{S_i}{D}$$

On peut alors enchaîner de manière optimale les images à afficher en mode truqué.

Afin de sélectionner les images à requérir, des adresses temporelles sont allouées aux images de la vidéo.

On note $T_{ref}$, l'adresse temporelle de la dernière image reçue avant l'activation de la lecture rapide. Les adresses temporelles des images I-frame de la vidéo sont notées $T(I\text{-frame})_j$, où j est l'index de l'image I-frame de la vidéo.

Les adresses temporelles des images I-frame requises pour l'affichage du mode truqué sont notées $T(I\text{-frame}, A)_k$, où k est l'index de l'image I-frame requise selon le mode truqué associé au facteur A (d'accélération).

La latence (ou durée de réception) de l'image I-frame requise k étant $L_k$ et dans la mesure où l'accélération du mode truqué est A, l'adresse temporelle de l'image suivante sélectionnée k+1 est donnée par la relation :

$$T(temp)_i = T_{ref} + A \times \sum_{k=1}^{i-1} L_k$$

où $T(temp)_i$ correspond à l'adresse d'une image de la vidéo sélectionnée de manière temporaire car elle peut ne pas correspondre à une image de type I-frame.

Il s'agit donc ci-dessus d'une étape intermédiaire de sélection visant à déterminer une image de type quelconque dans la vidéo selon un mode de réalisation de la présente invention. Puis, il convient ensuite de sélectionner une image de type I-frame dont l'adresse temporelle est proche de l'adresse temporelle de l'image ici sélectionnée.

Dans un mode de réalisation, on recherche donc l'adresse temporelle $T(I\text{-frame})_j$ d'une image I-Frame telle que:

$$| T(temp)_i - T(I\text{-frame})_j| \leq | T(temp)_i - T(I\text{-frame})_{j+1}|$$

$$| T(temp)_i - T(I\text{-frame})_j| \leq | T(temp)_i - T(I\text{-frame})_{j-1}|$$

Par conséquent, l'adresse temporelle de l'image I-frame à requérir, est $T(I\text{-frame})_j$. On donne donc la valeur de $T(I\text{-frame})_j$ au paramètre $T(I\text{-frame},A)_k$.

Puis, à une étape 202, on met à jour l'indice des images I-frame à requérir en l'incrémentant de la valeur 1.

Cette méthode permet d'adapter le mode truqué à un débit sensiblement fixe. En effet, une telle sélection des images I-frame à requérir s'adapte au débit sensiblement fixe. Dans le cas où le débit de réception est très faible et ne permettrait pas un rendu nominal, lorsqu'une lecture rapide est demandée, il est possible qu'un nombre conséquent d'images I-frame soit ignoré entre deux images I-frame affichées selon un mode de réalisation. Toutefois, même dans ces conditions difficiles de réception, la durée d'affichage de la vidéo est d'une durée correspondant à l'accélération requise. Puis, dans le cas d'un débit de réception plus important, un mode de réalisation permet l'affichage d'un grand nombre d'images I-frame, et ainsi un affichage fluide et détaillé du mode truqué.

Grâce à l'hypothèse d'un débit de réception d'une valeur fixe, il est avantageusement possible de transmettre dans un seul message de requête une pluralité d'images au serveur. Dans de telles conditions, on peut accélérer la détermination des images et le service de mode truqué est alors plus rapidement mis en place pour l'utilisateur.

Dans un mode de réalisation de la présente invention, le terminal requiert les images I-frame sélectionnées en indiquant dans un message de requête 204 leurs adresses temporelles. Dans ce cas, le serveur est adapté pour récupérer les images sur la base des adresses temporelles. Tel peut être le cas, si le serveur est informé de l'adresse temporelle $T_{ref}$ de l'image prise en référence au début du procédé de détermination itératif. Puis, en réponse, le serveur envoie un flux de données 205 correspondant à la requête 204.

Alternativement, on peut prévoir que le terminal indique au serveur des adresses physiques des images à requérir. Dans ce cas, le terminal peut disposer d'un fichier de correspondance adapté pour faire correspondre les adresses temporelles aux adresses physiques (c'est-à-dire aux positions de stockage) des images relativement au contenu numérique de la vidéo. Ce mode de réalisation est avantageusement adapté au protocole HTTP existant et permet l'utilisation de message de type GET 204 pour émettre la requête d'images auprès du serveur. Dans ces conditions, un terminal selon un mode de réalisation reste compatible avec les serveurs existants.

Plus précisément, un fichier de correspondance associé à une vidéo correspond ici à un fichier comprenant des informations permettant de déduire l'adresse physique d'une image I-frame à partir de son adresse temporelle. On peut également prévoir que ce fichier de correspondance comprenne la taille de chaque image I-frame ainsi que des informations générales concernant la vidéo, telles que la taille et la durée de la vidéo dans sa totalité par exemple. Ce fichier de correspondance peut par exemple être généré en association à la vidéo et transmis par le serveur au terminal en amont de la transmission de la vidéo à laquelle il est associé.

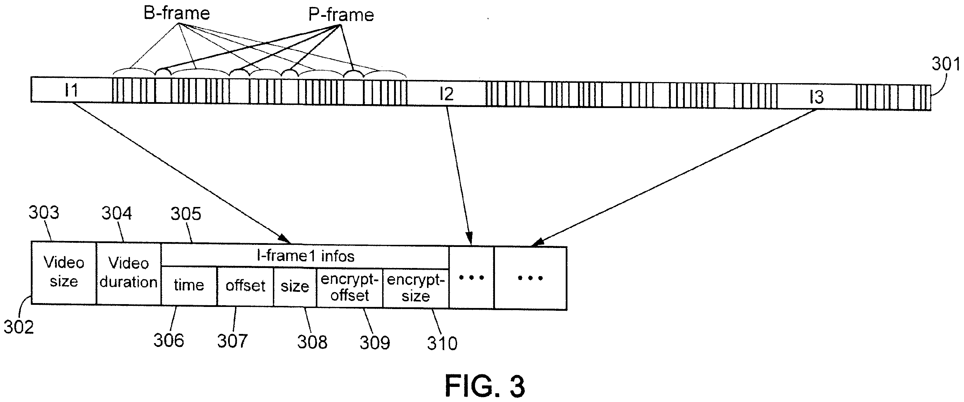

La figure 3 illustre une architecture d'un tel fichier de correspondance dans une application à la vidéo selon un mode de réalisation de la présente invention.

Une structure d'images 301 représente une structure de la vidéo. Ici, la vidéo est codée selon le codage H. 264. Elle comprend trois types d'images, à savoir des images I-frame ($I_1$, $I_2$ et $I_3$), P-frame ('predicted coded picture' en anglais) et B-frame ('biderectional prédictive coded picture'). Seules les images I-frame sont prises en considération pour l'affichage d'un mode truqué selon un mode de réalisation.

Ces trois types d'images s'organisent en GOP (group of pictures en anglais) de durées et de tailles différentes. Au sein de la vidéo, les images I-frame sont codées en tête de chaque GOP.

Une structure 302 représente un exemple de fichier de correspondance selon un mode de réalisation de la présente invention. Le fichier de correspondance comprend dans un premier champ d'en-tête 303 des informations relatives à la taille de la vidéo et dans un second champ d'en-tête 304 des informations relatives à la durée de rendu nominal de la vidéo. Ensuite, chaque image I-frame de la vidéo est décrite grâce à des informations stockées dans un champ 305. Ces informations indiquent pour l'image I-frame considérée ici, c'est-à-dire $I_1$, une adresse temporelle 306, une adresse physique 307, une taille 'size' 308, ainsi qu'éventuellement des positions de données de désembrouillage 309 et une taille de données de désembrouillage 310. Ce fichier fait donc correspondre les adresses physique et temporelle de chaque image I-frame de la vidéo.

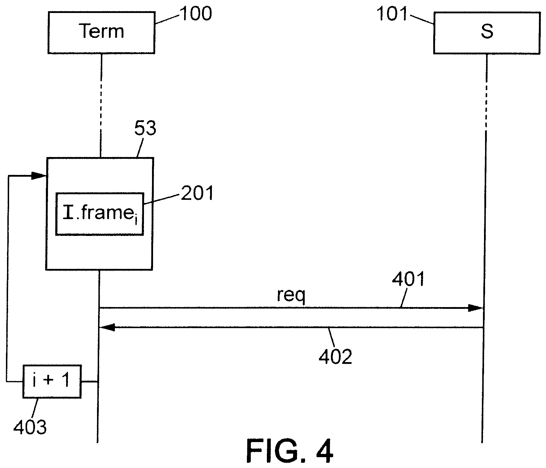

La figure 4 illustre un procédé de gestion de réception d'un contenu numérique par un terminal depuis un serveur selon un mode de réalisation de la présente invention dans lequel le débit de réception est considéré comme variable au cours du temps.

Ici, la valeur représentative de débit de réception est donc considérée comme une valeur variable. Dans ces conditions, on cherche à estimer au cours du temps une valeur représentative du débit de réception en fonction d'une durée de réception d'une image précédemment reçue. De préférence, on se fonde sur la durée de réception de l'image reçue suite à la précédente sélection. Mais on pourrait également prévoir de se fonder sur la durée de réception d'une image sélectionnée à une itération plus antérieure encore. En effet, dans le cas où le débit de réception ne subit pas de variations importantes et rapides, une durée de réception d'une image reçue il y a déjà un certain temps peut aussi être une valeur représentative de débit de réception.

Par la suite, à titre illustratif et non limitatif, il est prévu de prendre en considération la durée de réception de l'image qui vient d'être reçue pour sélectionner l'image suivante à requérir.

Dans ces conditions, à une itération i de l'étape S3, une image I-frame$_i$ est sélectionnée à une étape 201 en fonction de la durée de réception de l'image précédente sélectionnée I-frame$_{i-1}$. Cette image est ensuite requise auprès du serveur via un message de requête 401. Le serveur 101 y répond en transmettant les données de l'image requise via un message 402. La durée de réception de l'image I-frame$_i$ est mesurée en vue de la prochaine itération de l'étape 201. Puis, on incrémente l'index i à une étape 403 pour réitérer l'étape de détermination pour l'image I-frame suivante à afficher pour la mise en œuvre du mode truqué.

Comme dans le cas d'un débit de réception variable, il s'agit de déterminer les adresses temporelles des images à requérir successivement en fonction de la valeur indicative de débit de réception. Puis, soit les images sont requises en indiquant au serveur les adresses temporelles, soit elles sont requises en indiquant les adresses physiques. Les mêmes caractéristiques que celles énoncées ci-avant dans le contexte du mode de réalisation en débit de réception fixe peuvent être reprises ici.

Dans le cas du débit de réception variable, la détermination des adresses temporelles des données à requérir pour le rendu du mode truqué repose ici sur la durée de réception de l'image qui vient d'être reçue. L'équation suivante est alors vérifiée :

$$T(temp)_i = T(temp)_{i-1} + A*L_{i-1}$$

où $T(temp)_i$ est l'adresse temporelle de l'image temporaire sélectionnée à l'itération i de l'étape /b/ ;

où $T(temp)_{i-1}$ est l'adresse temporelle de l'image temporaire sélectionnée à l'itération i-1 de l'étape /b/ ;

A le facteur de modification du mode truqué ; et

$L_{i-1}$ est la durée de réception de l'image I-frame requise à l'itération i-1.

Cette égalité fournit une image temporaire qui est utilisée pour choisir l'I-frame à requérir auprès du serveur (la plus proche de l'image temporaire fournie par l'équation ci-dessus).

On peut également appliquer l'égalité suivante pour sélectionner l'image suivante :

$$T(temp)_i = T(I\text{-}frame, A)_{i-1} + A*L_{i-1}$$

où $T(temp)_i$ est l'adresse temporelle de l'image temporaire sélectionnée à l'itération i de l'étape /b/ ;

où $T(I\text{-}frame, A)_{i-1}$ est l'adresse de l'image effectivement sélectionnée à l'itération i-1 de l'étape /b/ pour être requise auprès du serveur;

A le facteur de modification du mode truqué ; et

$L_{i-1}$ est la durée de réception de l'image I-frame requise à l'itération i-1.

Ce mode de réalisation est particulièrement efficace dans le cas d'un débit variable. En effet, actualiser le débit de réception à chaque itération, ou tout au moins régulièrement, permet d'affiner la détermination des adresses temporelles ou physiques des données à requérir, et permet également de respecter la durée de rendu correspondant au mode truqué. Ces dispositions permettent d'optimiser la quantité de données rendues, c'est-à-dire de rendre un nombre maximum de données avec les contraintes de débit de réception données et la durée de rendu du contenu numérique selon le mode truqué.

Il convient de noter qu'au cours de la réception d'une vidéo par exemple, il est possible d'alterner la gestion de réception selon un mode de réalisation en assimilant le débit de réception à une valeur fixe, comme décrit en référence à la figure 2, et la gestion de réception selon un mode de réalisation en prenant en considération d'éventuelles variations de débit de réception, comme décrit en référence à la figure 4. Il peut en effet être avantageux de combiner ces deux modes de réalisation dans certaines conditions de réception.

Dans le cas d'une prise en compte d'éventuelles variations de débit de réception, il peut être pertinent de filtrer les valeurs représentatives de débit de réception afin de protéger le procédé contre de potentielles variations brusques de durée de réception qui ne seraient pas représentatives du débit de réception dans son ensemble.

Dans ce cas, le débit de réception peut être calculé après chaque réception d'une image I-frame à requérir en appliquant l'équation suivante :

$$D_i = \frac{S_i}{L_i}$$

où $D_i$ est une valeur de débit de réception relative à la réception de l'image I-frame précédemment requise d'index i ;

où $S_i$ est une taille de l'image I-frame d'index i ;

où $L_i$ est la durée de réception de l'image I-frame d'index i.

Ensuite, on se propose d'appliquer un filtre, de type passe-bas en se fondant sur des informations relatives à l'itération précédente. A cet effet, on peut appliquer notamment l'équation suivante :

$$\overline{D_i} = \alpha \times \overline{D_{i-1}} + (1-\alpha) \times D_i$$

où $\overline{D_i}$ est un estimateur du débit de réception relativement à l'image I-frame d'indice i ;

où $\overline{D_{i-1}}$ est un estimateur du débit de réception relativement à l'image I-frame d'indice i-1 ;

où $\alpha$ est un coefficient du filtre passe-bas compris entre 0 et 1.

Ensuite, on détermine une durée de réception estimée qui peut ensuite être avantageusement prise en compte dans l'étape de détermination suivante i.

$$\overline{L_i} = \frac{S_i}{\overline{D_i}}$$

On peut par exemple prévoir une estimation débit réseau initiale $D_0$, telle que :

$$D_0 = 0$$

ou

$$D_0 = T_{video} / S_{video}$$

où Tvideo est la durée totale de la vidéo et Svidéo est la taille de la vidéo.

L'équation suivante peut alors être vérifiée :

$$T(temp)_i = T(temp)_{i-1} + A* \overline{L}_{i-1}$$

où T(temp)$_i$ est l'adresse temporelle de l'image temporaire sélectionnée à l'itération i de l'étape /b/ ;
où T(temp)$_{i-1}$ est l'adresse temporelle de l'image temporaire sélectionnée à l'itération i-1 de l'étape /b/ ;
A le facteur de modification du mode truqué ; et
$\overline{L}_{i-1}$ est la durée de réception estimée de l'image I-frame requise à l'itération i-1.

Cette égalité fournit une image temporaire qui est utilisée pour choisir l'I-frame à requérir auprès du serveur (la plus proche de l'image temporaire fournie par l'équation ci-dessus).
On peut également appliquer l'égalité suivante pour sélectionner l'image suivante :

$$T(temp)_i = T(\text{I-frame}, A)_{i-1} + A* \overline{L}_{i-1}$$

où T(temp)$_i$ est l'adresse temporelle de l'image temporaire sélectionnée à l'itération i de l'étape /b/ ;
où T(I-frame, A)$_{i-1}$ est l'adresse de l'image effectivement sélectionnée à l'itération i-1 de l'étape /b/ pour être requise auprès du serveur;
A le facteur de modification du mode truqué ; et
$\overline{L}_{i-1}$ est la durée de réception estimée de l'image I-frame requise à l'itération i-1.

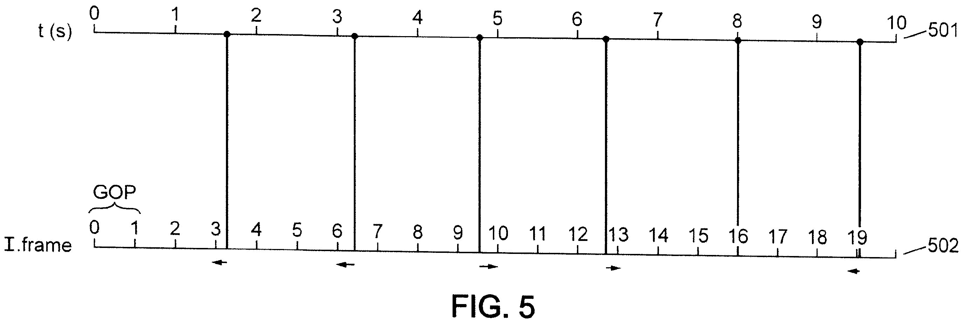

La figure 5 illustre en détail un procédé de gestion de réception d'une vidéo selon un mode de réalisation de la présente invention. Ici, à titre d'exemple, il s'agit d'une vidéo dont la durée de rendu nominal est de 10 secondes, à laquelle on applique un facteur de modification correspondant à une accélération égale à 2. La durée nominale de la vidéo est illustrée par une structure 502 schématisée en référence à un référentiel temporel 501 sur lequel chaque graduation indique 1 s. La combinaison des axes 501 et 502 fournit les adresses temporelles des images I-frame de la vidéo considérée. La structure schématisée 502 indique la position temporelle des images de type I-frame dans la vidéo considérée, I-frame$_i$ pour i allant de 0 à 19, les autres types d'image ne sont pas représentés.
La durée d'affichage de la vidéo en lecture rapide attendue est dans cet exemple de 5 secondes.
On considère que la taille des images de type I-frame est constante de 200 Ko et que l'espacement entre deux images I-frame consécutives est ici égal à 0.5 secondes. On considère ici que si le débit de réception de cette vidéo est supérieur à 1 Mo/s, un rendu nominal de la vidéo est possible.
Les sections suivantes décrivent l'application d'un procédé selon un mode de réalisation avec un débit de réception constant de valeur 250 ko/s qui ne permet pas un rendu nominal.
La taille d'une image I-frame étant 200 ko, la durée de réception d'une image I-frame est de 0,8 secondes. Par conséquent, en prenant en compte le facteur d'accélération 2, on peut chercher à sélectionner les images I-frame qui sont celles dont les adresses temporelles sont les plus proches des instants : 0s ; 1,6s ; 3,2s ; 4,8s ; 6,4s ; 8s et 9,6s, par application de l'équation suivante :

$$T(temp)_i = T_{ref} + A \times \sum_{k=1}^{i-1} L_k$$

On constate sur la figure que la sélection selon l'égalité ci-dessus nous fournit une image qui ne correspond pas à une image de type I-frame. On choisit ensuite les images I-frame qui sont situées temporellement les plus proches des images sélectionnées par l'égalité ci-dessus.
En référence à la figure, les images I-frame à requérir sont indexées par 0 ; 3 ; 6 ; 10 ; 13 ; 16 ; 19. Dans ce cas, 7 images de type I-frame sont sélectionnées sur 20 images I-frame de la vidéo. Ce rapport est inférieur à une image sur deux, rapport qui pourrait être obtenu si on appliquait le facteur d'accélération 2 en sélectionnant une image sur deux. Mais, grâce à l'affichage de ces 7 images, on peut avantageusement garantir le fait que la durée d'affichage en mode accéléré est deux fois plus réduite qu'en mode nominal.

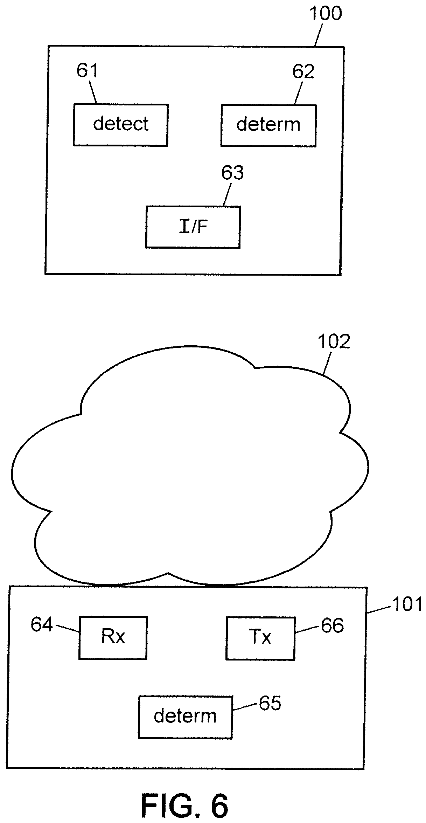

La figure 6 illustre un terminal et un serveur selon un mode de réalisation de la présente invention.
Un terminal 100 comprend :

- une unité de détection 61 adaptée pour détecter une activation d'un mode truqué correspondant à une modification de la durée de rendu nominal selon un facteur de modification associé audit mode truqué ;
- une unité de détermination 62 adaptée pour déterminer des données à requérir en fonction, d'une part, du facteur de modification et, d'autre part, d'une valeur représentative de débit de réception ;
- une unité d'interface 63 avec le réseau 102 adaptée pour

  - requérir lesdites données; et
  - recevoir les données requises.

Lorsque les données correspondent à une série d'unités de rendu du contenu numérique, des adresses temporelles étant associées aux unités de rendu de la série, chacune correspondant à une position temporelle de l'unité de rendu à laquelle elle est associée au sein de la série, relativement à la durée de rendu nominal de la série; l'unité de détermination 62 peut alors opérer par itérations successives, les données déterminées correspondant à une unité de rendu de la série ayant une adresse temporelle déduite en fonction du facteur de modification, de la valeur représentative de débit de réception et de l'adresse temporelle d'une unité de rendu correspondant aux données déterminées à l'itération précédente.
On peut aussi prévoir que le terminal a accès à un fichier faisant correspondre chaque adresse temporelle à une adresse physique pour les unités de rendu de la série sur la base de la durée de rendu nominal ; et que dans ce cas, l'unité d'interface 63 émet une requête comprenant l'adresse physique correspondant à l'adresse temporelle déterminée par l'unité de détermination 62.
Ce terminal 100 peut coopérer avec un serveur 101 qui comprend :

- une unité de réception 64 adaptée pour recevoir un message de requête 105 de données indiquant des adresses ;
- une unité de détermination 65 adaptée pour déterminer des données du contenu numérique en fonction des adresses indiquées dans le message de requête ; et
- une unité de transmission 66 adaptée pour transmettre 106 les données déterminées audit terminal.

On peut noter que les adresses ici utilisées peuvent être soit des adresses physiques soit encore des adresses temporelles. En effet, dans un premier temps, les unités à requérir sont déterminées sur la base de leurs adresses temporelles. Puis, il est possible de prévoir une traduction des adresses temporelles en adresses physiques soit au niveau du terminal, soit encore au niveau du serveur. Aucune limitation n'est attachée à cet aspect.

**Revendications**

1. Procédé de gestion de réception au niveau d'un terminal (100) d'un contenu numérique qui est transmis sous la forme d'un flux de données (103) dans un réseau (102); ledit contenu numérique étant reçu par ledit terminal avec un débit de réception ;

   une durée de rendu nominal étant associée au contenu numérique ;
   ledit procédé de gestion de réception comprenant les étapes suivantes au niveau du terminal :

   /a/ détecter (S1) une activation d'un mode truqué correspondant à une modification de la durée de rendu nominal selon un facteur de modification associé audit mode truqué ;
   /b/ déterminer (S3) des données correspondant à une unité de rendu du contenu numérique à requérir ayant une adresse physique déduite en fonction du facteur de modification, d'une valeur représentative de débit de réception, et d'une adresse temporelle d'une unité de rendu correspondant aux données déterminées à l'itération de l'étape /b/ précédente ;
   /c/ requérir (105) lesdites données au réseau à l'adresse physique déduite ; et
   /d/ recevoir (106) les données requises.

2. Procédé de gestion selon la revendication 1, dans lequel le terminal a accès à une structure d'informations faisant correspondre une adresse temporelle à une adresse physique pour les unités de rendu de la série sur la base de la durée de rendu nominal, et détermine l'adresse physique déduite en fonction d'une adresse temporelle correspondante.

**3.** Procédé de gestion de réception selon la revendication 1 ou 2, dans lequel la valeur représentative de débit de réception est une valeur fixe ; et

dans lequel, à l'étape /b/, on détermine une pluralité d'unités de rendu correspondant aux données à requérir ; et à l'étape /d/, on indique au réseau les données correspondant à ladite pluralité.

**4.** Procédé de gestion selon la revendication 1 ou 2, comprenant en outre l'étape suivante :

/e/ répéter les étapes /b/ à /d/ tant que le mode truqué est activé ;

dans lequel à l'étape /d/ on mesure une durée de réception d'unité de rendu correspondant aux données requises à l'étape /c/ précédente; et

dans lequel la valeur représentative de débit de réception pour l'itération suivante de l'étape /b/ est la durée de réception mesurée à l'étape /d/ précédente.

**5.** Terminal (100) de gestion de réception d'un contenu numérique transmis sous la forme d'un flux de données dans un réseau (102);

ledit contenu numérique étant reçu par ledit terminal avec un débit de réception ;

une durée de rendu nominal étant associée au contenu numérique ;

ledit terminal comprenant :

- une unité de détection (61) adaptée pour détecter une activation d'un mode truqué correspondant à une modification de la durée de rendu nominal selon un facteur de modification associé audit mode truqué ;
- une unité de détermination (62) adaptée pour déterminer des données correspondant à une unité de rendu du contenu numérique à requérir ayant une adresse physique déduite en fonction du facteur de modification, d'une valeur représentative de débit de réception, et d'une adresse temporelle d'une unité de rendu correspondant aux données déterminées précédemment par l'unité de détermination;
- une unité d'interface (63) avec le réseau adaptée pour

    - requérir lesdites données à l'adresse physique déduite ; et
    - recevoir les données requises.

**6.** Terminal selon la revendication 5, dans lequel le terminal a accès à une structure d'informations faisant correspondre une adresse temporelle à une adresse physique pour les unités de rendu de la série sur la base de la durée de rendu nominal, et

une unité de détermination (62) adaptée pour déterminer l'adresse physique déduite en fonction d'une adresse temporelle correspondante.

**7.** Terminal selon la revendication 5 ou 6, dans lequel la valeur représentative de débit de réception est une valeur fixe ; et dans lequel, l'unité de détermination (62) est en outre adaptée pour déterminer une pluralité d'unités de rendu correspondant aux données à requérir ; et l'unité d'interface (63) avec le réseau est en outre adaptée pour indiquer au réseau les données correspondant à ladite pluralité.

**8.** Terminal selon la revendication 5 ou 6, dans lequel l'unité de détermination (62) et l'unité d'interface (63) avec le réseau sont adaptées pour répéter la détermination des données, la requête des données et la réception les données requises tant que le mode truqué est activé et dans lequel l'unité d'interface (63) avec le réseau est adaptée pour mesurer une durée de réception d'unité de rendu correspondant aux données requises précédemment et dans lequel la valeur représentative de débit de réception pour la répétition de la détermination des données est la durée de réception mesurée précédemment par l'unité d'interface (63) avec le réseau.

**9.** Système de gestion de contenu numérique dans un réseau comprenant un terminal (100) selon la revendication 5 et un serveur (101) adapté pour coopérer avec ledit terminal ;

ledit serveur comprenant :

- une unité de réception (64) adaptée pour recevoir un message de requête (105) de données indiquant des adresses ;
- une unité de détermination (65) adaptée pour déterminer des données du contenu numérique en fonction des adresses indiquées dans le message de requête ; et
- une unité de transmission (66) adaptée pour transmettre (106) les données déterminées audit terminal.

**10.** Programme d'ordinateur comportant des instructions pour la mise en œuvre du procédé selon l'une des revendications 1 à 4, lorsque ce programme est exécuté par un processeur.

**11.** Support d'enregistrement sur lequel est stocké le programme d'ordinateur selon la revendication 10.

**Patentansprüche**

**1.** Verwaltungsverfahren des Empfangs, im Bereich eines Endgeräts (100), eines digitalen Inhalts, der in Form eines Datenstroms (103) in einem Netz (102) übertragen wird;

wobei der digitale Inhalt vom Endgerät mit einem Empfangsdurchsatz empfangen wird;
wobei dem digitalen Inhalt eine nominale Wiedergabedauer zugeordnet wird;
wobei das Empfangsverwaltungsverfahren die folgenden Schritte im Bereich des Endgeräts enthält:

/a/Erfassen (S1) einer Aktivierung eines Trick-Modus entsprechend einer Änderung der nominalen Wiedergabedauer gemäß einem dem Trick-Modus zugeordneten Änderungsfaktor;
/b/Bestimmen (S3) von Daten entsprechend einer Wiedergabeeinheit des anzufordernden digitalen Inhalts, die eine physikalische Adresse abgeleitet abhängig vom Änderungsfaktor, von einem repräsentativen Empfangsdurchsatzwert und von einer zeitlichen Adresse einer Wiedergabeeinheit entsprechend den bei der Iteration des vorhergehenden Schritts /b/ bestimmten Daten hat;
/c/Anfordern (105) der Daten vom Netz an der abgeleiteten physikalischen Adresse; und
/d/Empfang (106) der angeforderten Daten.

**2.** Verwaltungsverfahren nach Anspruch 1, wobei das Endgerät Zugang zu einer Informationsstruktur hat, die eine zeitliche Adresse mit einer physikalischen Adresse für die Wiedergabeeinheiten der Reihe auf der Basis der nominalen Wiedergabedauer in Übereinstimmung bringt, und die abgeleitete physikalische Adresse abhängig von einer entsprechenden zeitlichen Adresse bestimmt.

**3.** Empfangsverwaltungsverfahren nach Anspruch 1 oder 2, wobei der repräsentative Empfangsdurchsatzwert ein Festwert ist; und
wobei im Schritt /b/ eine Vielzahl von Wiedergabeeinheiten entsprechend den anzufordernden Daten bestimmt wird; und im Schritt /d/ dem Netz die der Vielzahl entsprechenden Daten angezeigt werden.

**4.** Verwaltungsverfahren nach Anspruch 1 oder 2, das außerdem den folgenden Schritt enthält:
/e/Wiederholen der Schritte /b/ bis /d/, so lange der Trick-Modus aktiviert ist;

wobei im Schritt /d/ eine Wiedergabeeinheit-Empfangsdauer entsprechend den im vorhergehenden Schritt /c/ angeforderten Daten gemessen wird; und
wobei der repräsentative Empfangsdurchsatzwert für die folgende Iteration des Schritts /b/ die im vorhergehenden Schritt /d/ gemessene Empfangsdauer ist.

**5.** Endgerät (100) zur Empfangsverwaltung eines digitalen Inhalts, der in Form eines Datenstroms in einem Netz (102) übertragen wird;

wobei der digitale Inhalt vom Endgerät mit einem Empfangsdurchsatz empfangen wird;
wobei eine nominale Wiedergabedauer dem digitalen Inhalt zugeordnet ist;
wobei das Endgerät enthält:

- eine Erfassungseinheit (61), die geeignet ist, eine Aktivierung eines Trick-Modus entsprechend einer Änderung der nominalen Wiedergabedauer gemäß einem dem Trick-Modus zugeordneten Änderungsfaktor zu erfassen;
- eine Bestimmungseinheit (62), die geeignet ist, Daten entsprechend einer Wiedergabeeinheit des anzufordernden digitalen Inhalts zu bestimmen, die eine physikalische Adresse abgeleitet abhängig vom Änderungsfaktor, von einem repräsentativen Empfangsdurchsatzwert und von einer zeitlichen Adresse einer Wiedergabeeinheit entsprechend den vorher von der Bestimmungseinheit bestimmten Daten hat;
- eine Schnittstelleneinheit (63) mit dem Netz, die geeignet ist

- die Daten an der abgeleiteten physikalischen Adresse anzufordern; und
- die angeforderten Daten zu empfangen.

**6.** Endgerät nach Anspruch 5, wobei das Endgerät Zugang zu einer Informationsstruktur hat, die eine zeitliche Adresse mit einer physikalischen Adresse für die Wiedergabeeinheiten der Serie auf der Basis der nominalen Wiedergabedauer in Übereinstimmung bringt, und
eine Bestimmungseinheit (62), die geeignet ist, die abgeleitete physikalische Adresse abhängig von einer entsprechenden zeitlichen Adresse zu bestimmen.

**7.** Endgerät nach Anspruch 5 oder 6, wobei der repräsentative Empfangsdurchsatzwert ein Festwert ist; und wobei die Bestimmungseinheit (62) außerdem geeignet ist, eine Vielzahl von Wiedergabeeinheiten entsprechend den anzufordernden Daten zu bestimmen; und die Schnittstelleneinheit (63) mit dem Netz außerdem geeignet ist, dem Netz die der Vielzahl entsprechenden Daten anzuzeigen.

**8.** Endgerät nach Anspruch 5 oder 6, wobei die Bestimmungseinheit (62) und die Schnittstelleneinheit (63) mit dem Netz geeignet sind, die Bestimmung der Daten, die Anforderung der Daten und den Empfang der angeforderten Daten zu wiederholen, so lange der Trick-Modus aktiviert ist, und wobei die Schnittstelleneinheit (63) mit dem Netz geeignet ist, eine Empfangsdauer einer Wiedergabeeinheit entsprechend den vorher angeforderten Daten zu messen, und wobei der repräsentative Empfangsdurchsatzwert für die Wiederholung der Bestimmung der Daten die vorher von der Schnittstelleneinheit (63) mit dem Netz gemessene Empfangsdauer ist.

**9.** Verwaltungssystem eines digitalen Inhalts in einem Netz, das ein Endgerät (100) nach Anspruch 5 und einen Server (101) enthält, der geeignet ist, mit dem Endgerät zusammenzuwirken;
wobei der Server enthält:

- eine Empfangseinheit (64), die geeignet ist, eine Anforderungsnachricht (105) von Daten zu empfangen, die Adressen anzeigt;
- eine Bestimmungseinheit (65), die geeignet ist, Daten des digitalen Inhalts abhängig von den in der Anforderungsnachricht angezeigten Adressen zu bestimmen; und
- eine Übertragungseinheit (66), die geeignet ist, die bestimmten Daten an das Endgerät zu übertragen (106) .

**10.** Computerprogramm, das Anweisungen zur Durchführung des Verfahrens nach einem der Ansprüche 1 bis 4 aufweist, wenn dieses Programm von einem Prozessor ausgeführt wird.

**11.** Speicherträger, auf dem das Computerprogramm nach Anspruch 10 gespeichert ist.

**Claims**

**1.** Method for management of reception in a terminal (100) of a digital content which is transmitted in the form of a data stream (103) over a network (102);

said digital content being received by said terminal with a reception rate;
a nominal reproduction duration being associated with the digital content;
said method for reception management comprising the following steps in the terminal:

/a/ detecting (S1) an activation of a trick mode corresponding to a modification of the nominal reproduction duration according to a modification factor associated with said trick mode;
/b/ determining (S3) data corresponding to a reproduced unit of the digital content to be requested having a physical address deduced as a function of the modification factor, of a representative value of reception rate and of a time-stamp address of a reproduced unit corresponding to the data determined in the iteration of the preceding step /b/;
/c/ requesting (105) said data from the network at the deduced physical address; and
/d/ receiving (106) the requested data.

**2.** Management method according to Claim 1, wherein the terminal has access to an information structure making a time-stamp address correspond to a physical address for the reproduced units of the series on the basis of the nominal reproduction duration, and determines the physical address deduced as a function of a corresponding time-stamp address.

3. Method for reception management according to Claim 1 or 2, wherein the representative value of reception rate is a fixed value; and

wherein, in step /b/, a plurality of reproduced units corresponding to the data to be requested are determined; and in step /d/, the data corresponding to said plurality are indicated to the network.

4. Management method according to Claim 1 or 2, further comprising the following step:

/e/ repeating steps /b/ to /d/ as long as the trick mode is active;
wherein, in step /d/, a duration of reception of a reproduced unit corresponding to the data requested in the preceding step /c/ is measured; and
wherein the representative value of reception rate for the following iteration of step /b/ is the duration of reception measured in the preceding step /d/.

5. Terminal (100) for management of the reception of a digital content transmitted in the form of a data stream over a network (102);

said digital content being received by said terminal with a reception rate;
a nominal reproduction duration being associated with the digital content;
said terminal comprising:

- a detection unit (61) designed to detect an activation of a trick mode corresponding to a modification of the nominal reproduction duration according to a modification factor associated with said trick mode;
- a determination unit (62) designed to determine data corresponding to a reproduced unit of the digital content to be requested having a physical address deduced as a function of the modification factor, of a representative value of reception rate and of a time-stamp address of a reproduced unit corresponding to the data determined previously by the determination unit;
- a network interface unit (63) designed to
- request said data at the deduced physical address; and
- receive the requested data.

6. Terminal according to Claim 5, wherein the terminal has access to an information structure making a time-stamp address correspond to a physical address for the reproduced units of the series on the basis of the nominal reproduction duration; and
and a determination unit (62) designed to determine the physical address deduced as a function of a corresponding time-stamp address.

7. Terminal according to Claim 5 or 6, wherein the representative value of reception rate is a fixed value; and
wherein the determination unit (62) is further designed to determine a plurality of reproduced units corresponding to the data to be requested; and the network interface unit (63) is further designed to indicate the data corresponding to said plurality to the network.

8. Terminal according to Claim 5 or 6, wherein the determination unit (62) and the network interface unit (63) are designed to repeat the determination of the data, the requesting of the data and the reception of the requested data as long as the trick mode is active and wherein the network interface unit (63) is designed to measure a duration of reception of a reproduced unit corresponding to the data requested previously and wherein the representative value of reception rate for the repetition of the determination of the data is the duration of reception measured previously by the network interface unit (63).

9. System for management of digital content over a network comprising a terminal (100) according to Claim 5 and a server (101) designed to cooperate with said terminal;
said server comprising:

- a reception unit (64) designed to receive a message for a request (105) for data indicating addresses;
- a determination unit (65) designed to determine data of the digital content as a function of the addresses indicated in the request message; and
- a transmission unit (66) designed to transmit (106) the determined data to said terminal.

10. Computer program comprising instructions for the implementation of the method according to one of Claims 1 to 4, when this program is executed by a processor.

11. Recording medium on which the computer program according to Claim 10 is stored.

100
102
103
101
S

Term

S₁ Detect

stop 104

S₂ ✗

S₃ Determ

**FIG. 1**

req 105

106

100
Term

101
S

S₃

I.frame_i 201

i = i+1 202

**FIG. 2**

req 204

205

EP 3 840 335 B1

B-frame          P-frame

301

I1 | I2 | I3

| 303 | 304 | 305 | | | | | | |
|-----|-----|-----|---|---|---|---|---|---|
| Video size | Video duration | I-frame1 infos | | | | | ••• | ••• |
| | | time | offset | size | encrypt-offset | encrypt-size | | |

302

306    307    308    309    310

**FIG. 3**

FIG. 4

EP 3 840 335 B1

FIG. 5

FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060037057 A
- US 2008148327 A